# EUROPEAN PATENT APPLICATION

(11) **EP 2 823 953 A1**
(43) Date of publication of application: **14.01.2015**
(21) Application number: 14176794.7
(22) Date of filing: 11.07.2014
(51) Int. Cl.: B29C 67/00, G05B 19/4099

(54) **Numerically-controlled device for manufacturing three-dimensional objects**

(30) Priority: 12.07.2013 IT MI20131174
(71) Applicant: Fabtotum S.R.L., 20067 Tribiano (MI) (IT)
(72) Inventor: Rizzuto, Marco, 20067 Tribiano MI (IT); Grieco, Giovanni, 20067 Tribiano MI (IT)
(74) Representative: Sgobba, Marco

(57) **Abstract**

A numerically-controlled device for manufacturing three-dimensional objects comprises a machining head (3) comprising at least one printing nozzle for fusing and depositing successive layers of polymer material, and a machining tool for material removal, a base plate (4) facing the machining head (3) to receive the polymer material, translating members (5) operable between the machining head (3) and the base plate (4) to translate the machining head (3) relative to the base plate (4) along three orthogonal axes (X, Y, Z) of movement. Rotational members (20) are operable on a workpiece to rotate the workpiece relative to the machining head (3) about an axis of rotation (R) for the workpiece that is perpendicular to two (X, Z) and parallel to one (Y) of said three axes of movement.

## Description

### TECHNICAL FIELD

The present invention relates to a numerically-controlled device for manufacturing three-dimensional objects, particularly adapted for use in craft and hobby applications, or anyway in applications that require the fabrication of small-sized objects.

### BACKGROUND OF THE INVENTION:

Objects produced in craft and hobby applications, such as orthodontics, jewelry, shoemaking, model building and the like, are often unique pieces or pieces produced on a very small scale.

Craftsmen usually work on a commission basis, which means that they produce objects upon special customer request, and according to special customer requirements. One example thereof is a dental technician who has to make a dental prosthesis or an airplane model builder who has to make a part of his/her aircraft model. The above requirement may arise even in small industrial environments, in which objects or devices have to be produced on a small scale or as unique pieces.

In order to make such objects, a prototype is often required to evaluate the features and make the required corrections to the original design to which the prototype is related.

The prototype is usually digitally defined and designed by computer assisted design software, whereupon a physical copy is later made. Devices are known which interface with the digital design and form physical prototypes made of a polymer material.

Among such devices 3D printers have a key role. These devices form objects by controlled addition of superimposed layers of material. A 3D printer operates by taking a 3D file from a computer and using it to form a series of cross-sectional portions. Then, each portion is printed, one on top of the other, to create the object. 3D "additive manufacturing" printers, which use a nozzle to deposit a molten polymer on a support structure, layer by layer, are particularly appreciated. As the cost of 3D printers has dramatically decreased in recent years, such printers have been increasingly used for prototyping in craft and hobby applications and in small industries.

3D printers allow craftsmen and small industries to obtain prototypes of their creations autonomously and in reasonable times.

Nevertheless, the process to obtain a fully functional finished product requires further machining.

First, changes must be made to the prototype, if needed, for full compliance with specifications (which is the reason why the prototype is made). This requirement is usually met using two different methods. The prototype may be changed "by hand", i.e. by manual operation thereon, otherwise a more accurate and industrialized method may be used to make the desired changes to the digital design and to submit the prototype to further machining with numerically-controlled automatic devices. In the former case, once the prototype has been optimized, a digital model of the final prototype must be reconstructed. For this purpose, a 3D scanner (either an optical scanner or a mechanical tracer) is used to reconstruct the scanned shape in digital form (a scan of a three-dimensional object might also be the start of the entire process, if the special requirement were to change something that already exists). In the latter case, the prototype must be placed in a numerically-controlled machine tool, and once digital changes are made to the digital design, mechanical machining is carried out for material removal, by controlling the numerically-controlled machine according to the digital design so changed. It shall be noted that both processes are iterative, i.e. continue until the prototype fully complies with the required specifications.

Once the final digital design has been defined, the real object must be fabricated. It the final object is made of a material other than the (polymer) material that is used in the 3D printer, then the final object is usually obtained by material removal from a block of raw material. In this case, a numerically-controlled machine tool must be used again to manufacture the final object which, if needed, may be produced in identical specimens an undetermined number of times. Actually, this step is usually carried out when manufacturing a very large number of identical objects, when the advantages of this procedure become evident (fast, efficient and reliable production of identical objects). Nevertheless, in the present case of unique pieces or very small production scales, this procedure is too expensive. Indeed, as mentioned above, it requires a 3D additive manufacturing printer (for making the prototype) a 3D scanner (for scanning the changed prototype and scanning the starting object to be changed), as well as a numerically-controlled material removal machine tool (at least for producing the final object). The purchase and maintenance costs for these machines, as well as those for keeping the machines in the processing premises are directly reflected on the manufacturing costs of the unique piece or the pieces of a limited edition, which become very expensive.

For this reason, it sometimes happens that the manufactured product is fabricated with less expensive traditional techniques, which are much less accurate than the production techniques that use numerically-controlled machines.

The Applicant has found that considerable advantages would be achieved by the provision of a numerically-controlled device for manufacturing three-dimensional objects, which would allow manufacture of unique pieces or limited-edition pieces at low costs.

Therefore, the technical purpose of the present invention is to provide a numerically-controlled device for manufacturing three-dimensional objects having low purchase and operating costs.

Particularly, the object of the present invention is to provide a numerically-controlled device for making three-dimensional objects in which the ratio of the volume (or dimensions) of the machine to the maximum volume of manufacturable objects is as low as possible.

### SUMMARY OF THE INVENTION

According to the present invention, the technical purpose and the intended object are fulfilled by a numrically-controlled device for manufacturing three-dimensional objects as defined by the features of one or more of the annexed claims.

### BRIEF DESCRIPTION Of THE DRAWINGS

The features and advantages of the invention will appear from the following detailed description of an embodiment, which is illustrated without limitation in the annexed drawings, in which:
Figure 1 is an exploded view of a numerically-controlled device for manufacturing three-dimensional objects according to the present invention;
Figure 2 is an enlarged view of a few parts of the device of Figure 1; and
Figure 3 is an enlarged view of a few parts of the device of Figure 1, with certain parts omitted to better show other parts.

### DETAILED DESCRIPTION OF THE INVENTION

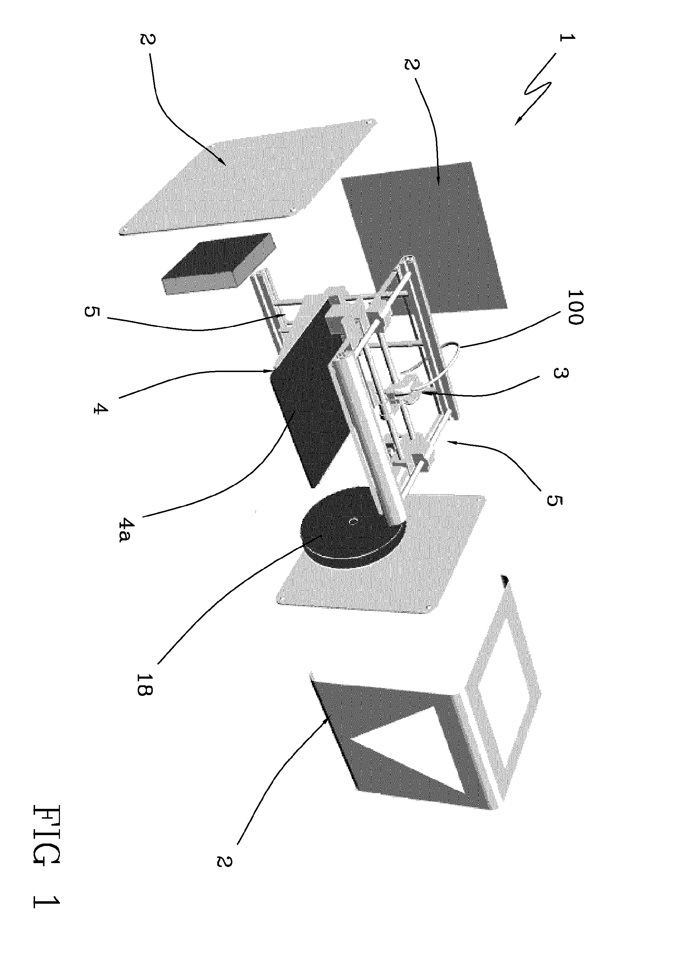

Referring to Figure 1, a numerically-controlled device for manufacturing three-dimensional objects according to the present invention has been generally designated by numeral 1.

The device 1 comprises a containing structure 2, such as a frame, which has covering panels or self-supporting covering panels, in mutually engaged relationship, attached thereto. All the components required for operation of the device 1 are housed within the containing structure 2.

Particularly, the containing structure 2 contains a machining head 3 which has at least one printing nozzle for fusing and depositing layers of polymer material one on top of the other. Such printing nozzle is of conventional and known type and is a typical extrusion nozzle of a 3D additive manufacturing printer, operating by polymer material addition.

The device 1 comprises a base plate 4 facing the machining head 3 and comprising a first surface 4a designed to receive the layers of polymer material deposited by the printing nozzle (see Figure 1). This first surface 4a is preferably covered with glass or anyway with a smooth and uniform low heat-conductive material. Preferably, this first surface 4a has heating members (e.g. electric resistors), to facilitate curing of the deposited material.

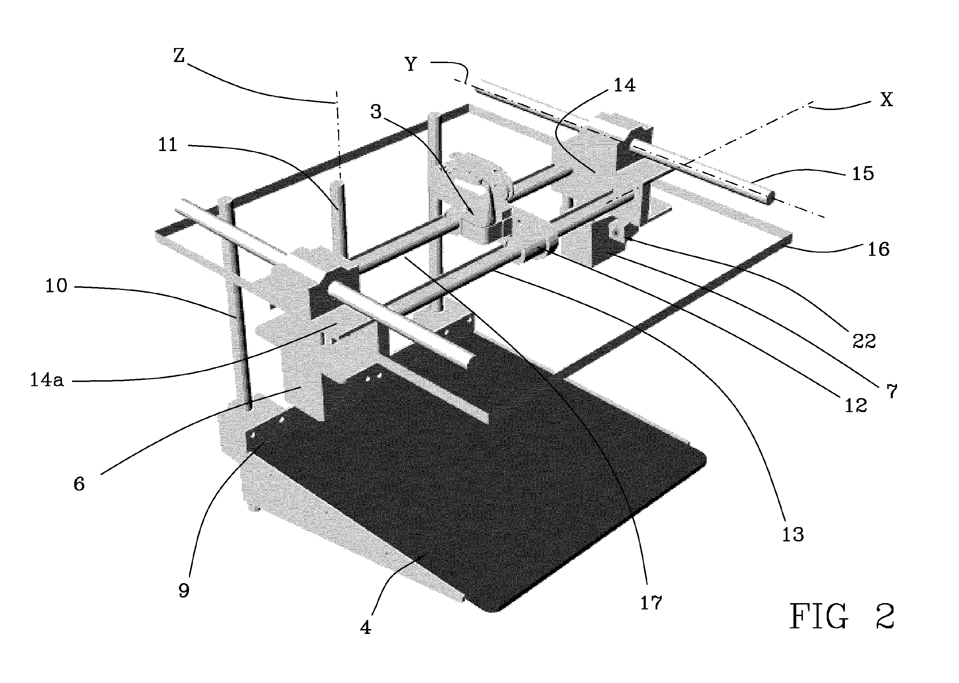

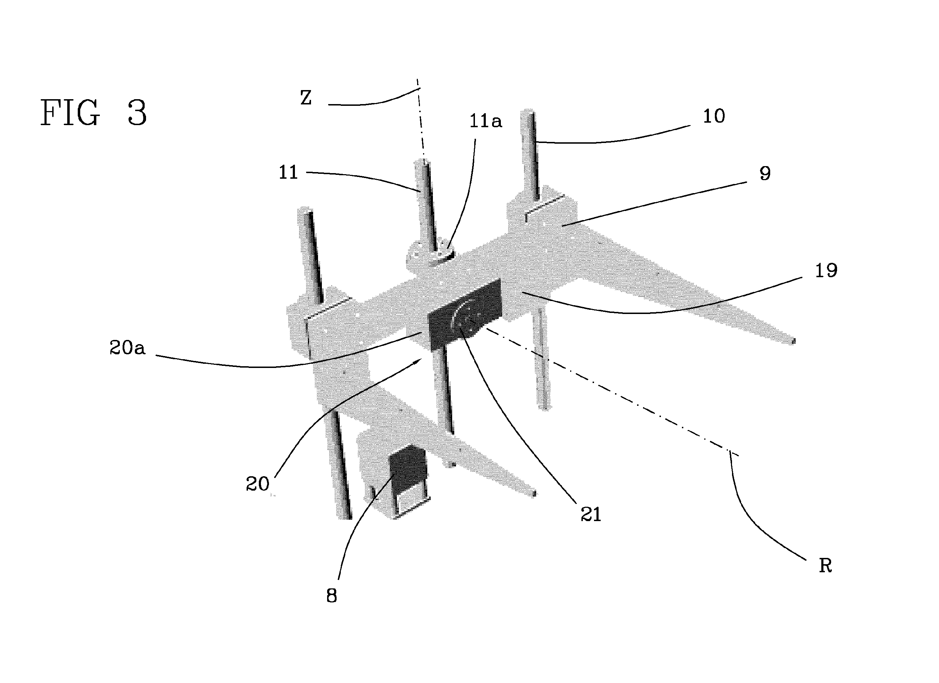

Translating members 5 operable along three orthogonal axes X, Y, Z are provided for the machining head 3 and the base plate 4 to move relative to each other. Particularly, the drive members 5 comprise a first motor 6, designed to translate the machining head 3 in a first direction X, a second motor 7 designed to translate the first motor 6 in a second direction Y perpendicular to the first direction X and a third motor 8 designed to translate the base plate 4 in a third direction Z perpendicular to the first X and second Y directions. The third direction Z is substantially perpendicular to the plane in which the base plate 4 lies (see Figure 2). Preferably, the first 6, second 7 and third 8 motors are electric motors. Particularly, the third motor 8 is operable on a slide 9 which slides in the third (vertical) direction Z along guide rods 10 extending parallel to the third direction Z. This third motor 8 rotates a worm 11 arranged parallel to the above mentioned guide rods 10, which is acted upon by a ring nut 11a joined to the slide 9 (see Figure 3). The base plate 4 is joined to the slide 9 and may be raised and lowered relative to the machining head 3 (see Figure 2). The first motor 6 is operable on at least one slide 12, preferably a pair of opposed slides, sliding along a respective guide rod 13 arranged parallel to the first direction X. It shall be noted that the machining head 3 is joined to such slide 12. The second motor 7 is carried by a slide 14 of a pair of opposed slides 14, 14a guided along guide rods 15 parallel to the second direction Y. The guide rods 13 of the first motor 6 are joined to and extend between the slides 14, 14a of the second motor 7. Thus, when the second motor 7 moves in the second direction Y, the first motor 6 also moves in the same direction.

The second motor comprises a pinion meshing with a toothed belt 16 extending in the first direction Y. This toothed belt 16 is formed from a flexible material and is integral with the containing structure 2. Thus, when the second motor 7 is actuated, the pinion rotates and meshes with the toothed belt 16, thereby causing the slides 14, 14a and the second motor to move forward in the second direction Y. It should be noted that this particular mechanism minimizes any vibrations transmitted by the containing structure 2 to the second motor 7 and vice versa, as a flexible material is interposed between such two elements. Preferably, the toothed belt 16 is closed into a loop about the containing structure 2 and is engaged with the slide 14a opposing the slide 14 that carries the second motor 7. The toothed belt 16 is returned by pulleys to extend along the entire perimeter of the containing structure 2. Due to this feature, any torque that the second motor 7 might transfer to its own slide is eliminated, by being totally compensated for by the engagement reaction provided by the engagement of the toothed belt 16 on the slide 14 opposing the slide 14 that carries the second motor 14. This advantage is particularly appreciated when the device operates as a material removal machine tool (as more clearly explained below). The first motor 6 comprises a pinion that engages a toothed belt 17 (only outlined in Figure 2) which is closed into a loop on a pulley that extends on the first direction X. The machining head is joined to the toothed belt 17, such that it may be translated when the toothed belt is moved by the first motor 6.

The printing nozzle receives a bead 100 of polymeric material (preferably guided in a sheath), which is held within a coil 18, located in the containing structure 2 (see Figure 1). Particularly, the bead of polymeric material is sent to the nozzle by an electric motor 19 which acts upon the bead by imparting an axial thrust thereto, thereby causing the coil to be unreeled and the bead to move toward the nozzle. Such electric motor 19 is joined to the slide 9 of the third motor 8 (see Figure 3). Preferably, the electric motor 19 is placed below the base plate 4. Furthermore, the electric motor 19 is preferably a stepper motor having a variable angular velocity.

The above description clarifies the function of the 3D printer of the structure, which allows the production of prototypes and/or products.

Advantageously, the machining head 3 also comprises a machining tool for material removal, such as milling cutter, which may be interchangeable according to the particular machining operation to be made.

Thus, this material-removing machining tool can perform mechanical machining on a workpiece, thereby allowing finished objects to be formed by means of the device that was used to form the prototype and/or the product made of the polymer material. Furthermore, this machining tool for material removal can finish and/or change the prototype so formed for full compliance with relevant specifications.

The base plate 4 comprises a second surface, opposite to the first surface 4a, which is designed to act as an abutment surface for stable retention of a workpiece. The first or second surface may be exposed to the machining head 3, by simply removing the base plate 4 from its support and remounting it by suitably orienting the two surfaces.

For the workpiece to be machined along a fourth axis, in addition to the above mentioned three axes X, Y, Z, the device 1 further comprises rotational members 20 which are operable on the workpiece to rotate the latter relative to the machining head (see Figure 3). The rotational members 20 define an axis of rotation R for the workpiece, which is perpendicular to two X, Z and parallel to one Y of the three axes of movement of the machining head. The rotational members 20 comprise an electric actuator 20a connected to a drive shaft and an attachment member 21, which is designed to receive a workpiece holder and hold it in stable engagement, said holder being rotatably constrained to the rotating shaft. Thus, by applying a workpiece holder to the attachment member 21 and clamping the workpiece on the workpiece holder, the workpiece may be presented to the machining head 3 in any angular position about the axis of rotation R.

Advantageously, the above mentioned electric actuator for the rotational members 20 is the above described electric motor 19 used to feed the bead of polymer material to the printing nozzle.

This will afford perfect synergy between 3D printer and machine tool operating modes, as the two operating modes share both the members that accomplish the same task in both operating modes (such as the drive members 5) and the members that accomplish different tasks according to the machining operation being carried out (such as the electric motor 19), thereby providing a compact device having low manufacturing and management costs.
Particularly, in order to allow the electric motor 19 to operate both as a polymeric bead feeder and as a rotational member 20 for the workpiece, the electric motor 19 comprises a first rotating drive shaft about an axis of rotation parallel to the axis of rotation R of the rotational members 20 and mechanically coupled to the attachment member 21, and a second drive shaft mechanically coupled to a mechanism operable on the polymeric bead for feeding it. The first and second drive shafts are mechanically coupled to an input shaft of the electric motor 19 (e.g. through bevel gears and other types of differential drives). Preferably, the electric motor 19 is a stepper motor, allowing angular position control. In the preferred embodiment of the invention, the electric motor 19 completes a full rotation each 200 steps in a time ranging from 2 seconds to 5 minutes. Advantageously, the angular velocity of the electric motor 19 may be changed according to the operating mode. Particularly, when the electric motor 19 is actuated to feed the polymeric bead, the angular velocity of the motor is lower than the angular velocity it has when it is actuated to rotate the workpiece. Likewise, when the electric motor 19 is actuated to feed the polymeric bead, the torque of the motor is higher than the torque it has when it is actuated to rotate the workpiece. It shall be noted that, when the rotational member 20 is used to rotate a workpiece, the base plate 4 is removed to allow the machining head to reach the workpiece.

It will be appreciated from the above that a workpiece may be machined by material removal to form the final object.

Also, the device 1 comprises a scan head 22 which is designed for morphologically mapping a three-dimensional object. The scan head 22 may be joined to the machining head 3 or may be integral to the frame of the containing structure 2. The scan head 22 measures the relative distance between the various parts of the object being scanned and a fixed point, to reconstruct a 3D image of the scanned object. This will allow the creation of a digital 3D model of the changed prototype and the formation of the final object from such scan. The machining head 3 may further comprise a tracer (not show) for 3D scanning of an object. Such tracer is designed to be moved by the drive members 5 and contact an object rotated by the rotational members 20. The contact points between the tracer and the object are stored to reconstruct a digital 3D image of the traced object.

The movement of the machining head 3, the scan head 22 and the various motors as described above is digitally controlled by a control and monitoring unit which may be interfaces with 3D modeling software.

The invention fulfills the intended objects.
A single device, contained in a single containing structure may be used to make prototypes, change them and manufacture the final object, as well as to reconstruct a digital image from a product, change the image and manufacture changed products as unique pieces or limited editions.
It shall be noted that both 3D printing and material removal machining are carried out in the same processing space, i.e. in the same physical area (within the containing structure), by switching the device 1 between a 3D printing mode and a material removal machining mode. The same physical working space may be further used to perform 3D scanning of products.
This arrangement will provide a small-size device having low management costs (because the mechanical components that perform 3D printing are mostly the same that perform material removal machining and 3D scanning).
Those skilled in the art will obviously appreciate that a number of changes and variants may be made to the arrangements as described hereinbefore to meet incidental and specific needs. For example, the scan head 22 may be used to scan an object and allow perfect reproduction thereof Such reproduction may be obtained using the device in both 3D printing mode and material removal machining mode, according to the material of which the copy has to be made and the purpose of such copy. All of these variants and changes fall within scope of the invention, as defined in the following claims.

## Claims

1. A numerically-controlled device for manufacturing three-dimensional objects, comprising a containing structure (2), containing:
a machining head (3) comprising at least one printing nozzle for fusing and depositing successive layers of polymer material, and a machining tool for material removal;
an electric motor (19) for feeding a web (100) of polymer material from a roll (18) to said printing nozzle;
a base plate (4) facing said machining head (3) and comprising a first surface (4a) designed to receive said successive layers of polymer material;
translating members (5) operable between said processing head (3) and said base plate (4), which are designed to translate said machining head (3) relative to said base plate (4) and/or vice versa, said translating members (5) defining three mutually orthogonal displacement axes (X, Y, Z);
rotational members (20) operable on a workpiece to rotate said workpiece relative to said machining head (3), said rotational members (20) defining an axis of rotation (R) for said workpiece which is perpendicular to two (X, Z) and parallel to one (Y) of said three displacement axes, said rotational members (20) comprising an electric actuator (20a) connected to a drive shaft and an attachment member (21), which s designed to receive a workpiece holder and hold it in stable engagement, said holder being rotatably constrained to said rotating shaft, said electric motor (19) for feeding the web (100) of polymer material from the roll (18) to the printing nozzle coinciding with said electric actuator (20a) of the rotational members.

2. A device as claimed in claim 1, wherein said base plate (4) comprises a second surface, opposite to the first surface (4a), which is designed to receive and engage a workpiece; said base plate (4) being adapted to be switched between a deposition position in which said first surface (4a) faces said machining head (3) and a removal position in which said second surface faces said machining head (3).

3. A device as claimed in any of the preceding claims, wherein said translating members (5) comprise a first motor (6), designed to translate said machining head (3) in a first direction (X), a second motor (7) designed to translate said machining head (3) in a second direction (Y) perpendicular to said first direction (X) and a third motor (8) designed to translate said base plate (4) in a third direction (Z) perpendicular to the first (X) and second (Y) directions; said third direction (Z) being substantially perpendicular to the plane in which said base plate (4) lies.

4. A device as claimed in claim 3, wherein said second motor (7) comprises a pinion meshing with a toothed belt (16) extending in said second direction (Y), said toothed belt (16) being formed from a flexible material and integral with said containing structure (2).

5. A device as claimed in claim 4, wherein said second motor (7) is carried by a slide (14) of a pair of opposed slides (14, 14a) guided along guide rods (15) parallel to the second direction (Y); said toothed belt (16) being closed into a loop around the containing structure (2) and being attached to the slide (14a) opposed to the slide (14) that carries the second motor (7).

6. A device as claimed in claim 1, wherein said electric motor (19) is placed below said base plate (4).

7. A device as in claim 3, wherein said electric motor (19) is integral with said base plate (4) to be translated in said third direction (Z).

8. A device as claimed in any of the preceding claims, further comprising a scan head (22) which is designed for morphologically mapping a three-dimensional object.
